# EUROPEAN PATENT APPLICATION

(11) **EP 4 850 786 A1**
(43) Date of publication of application: **09.12.2026**
(21) Application number: 25382564.0
(22) Date of filing: 02.06.2025
(51) Int. Cl.: B01D 53/04, B01D 53/02, B01J 20/10, B01J 20/26

(54) **CO2 HANDLING DEVICE AND METHOD TO EXTRACT CO2**

(71) Applicant: Universitat de Girona, 17004 Girona (ES)
(72) Inventor: LÓPEZ DE LEÓN, Luis Rafael, 17004 Girona (ES); PUIG BROCH, Sebastià, 17455 Caldes de Malavella (ES); BALAGUER CONDOM, Maria Dolors, 17003 Girona (ES); CABRERA CODONY, Alba, 17100 La Bisbal d'Empordà (ES); SAGANIAS, Nicolás, 17720 Maçanet de Cabrenys (ES)
(74) Representative: Torner, Juncosa I Associats, SL

(57) **Abstract**

The present disclosure relates to a CO₂ handling device with an air-tight housing containing a CO₂ adsorbent made of fumed silica and low molecular weight polyethyleneimine, including air and inert gas inlet pipes, an air outlet pipe, impellers to control airflow, and valves to seal the housing; a vacuum pump, an inert gas deposit, and heating tapes made of polyimide for cleaning and regeneration phases; sensors to monitor CO₂ concentration and temperature; and a control unit managing the operational phases of air cleaning, heating, CO₂ desorption, and reset, by ensuring efficient CO₂ capture and release by controlling flow, temperature, and pressure accordingly. The present disclosure also relates to a method for extracting CO₂ from indoor air involving passing air through a housing with a CO₂ adsorbent below 40°C, heating the adsorbent to 70-100°C, cleaning it with inert gas and vacuum, and cooling it, the adsorbent being made of fumed silica and polyethyleneimine, and being heated by polyimide heating tapes.

## Description

### TECHNICAL FIELD

The present disclosure relates to a carbon dioxide (CO₂) handling device and to a method to extract CO₂ from air.

### BACKGROUND ART

Indoor air quality is a growing concern in enclosed environments such as offices, vehicles, and space habitats. Elevated levels of CO₂ negatively impact human cognition, comfort, and health. Efficient and compact systems for indoor CO₂ extraction are required for such controlled environments, preferably operating without consumable chemicals and with the ability to regenerate the adsorbent material.

Most carbon capture and utilization (CCU) and carbon capture and storage (CCS) technologies primarily target CO₂ emissions from large point sources. Still, it is estimated that a significant portion of the total CO₂ emission, ranging between one-third and one-half, originates from numerous distributed sources such as commercial and industrial buildings and small sources like transportation vehicles. It is reported that buildings consume 40% of global energy, 70% in some major cities, and are thus a major contributor to global warming. To address this issue, various stakeholders, including governments, research entities and businesses have put forth ambitious proposals to reduce the carbon footprint of buildings.

In this direction, there has been a growing interest in the capture and utilization of CO₂ through direct air capture (CO₂-DAC). This interest in CO₂-DAC is also reflected in the published references in the literature, although most of the published references and works point at CO₂-DAC technologies designed for outdoor environments, rather than indoors. Carrying out outdoor CO₂-DAC versus indoor CO₂-DAC has a major impact in the type of technology designed and applied to capture CO₂. Size limitation is a significant constraint for indoor CO₂-DAC technologies, compared to outdoor CO₂-DAC.

On the other hand, indoor CO₂-DAC holds thermodynamic advantages, due to the higher CO₂ concentrations found indoors, commonly ranging from 1,000 to 3,000 ppmᵥ, and sometimes as high as 4,000 - 6,000 ppmᵥ, while atmospheric CO₂ concentration outdoors is 415 ppmᵥ. This offers a potential source of renewable carbon if an appropriately capture prototype is designed to be adapted into indoor environments. Because of the higher CO₂ concentration of indoor air streams, performing CO₂-DAC can reduce the volume of gas that must be processed, thereby lowering the reactor size and operating costs.

There are in the prior art several solutions to capture CO₂ in closed environments i.e. indoors.

For instance, WO2013177290A2 describes a method for controlling a scrubber with an adsorbent, which involves flowing a gas stream through the scrubber, adsorbing pollutants during an adsorption phase, and purging pollutants during a regeneration phase. The method includes cycling between these phases while limiting their durations to less than complete phases.

WO2012158911A2 discloses a method for reducing CO₂ contained in air from an enclosed environment, the method comprising: providing a sorbent and a support for the sorbent, the sorbent comprising an amine-based or amine-like compound; streaming a first gas containing CO₂ from inside an enclosed environment through the sorbent such that the sorbent captures at least some of the of the CO₂ from the first gas; and streaming a second gas containing less CO₂ than the first gas from outside the environment through the sorbent such that the sorbent releases at least some of the captured CO₂ to the second gas.

WO2021089916A1 describes a method for recovering carbon dioxide from air, characterized in that air is passed through a recovery device where carbon dioxide is adsorbed onto a sorbent material. After stopping air flow, vacuum conditions are established, followed by feeding carbon dioxide through the sorbent material, where it is heated by microwaves to release the adsorbed carbon dioxide for collection.

WO2022020634A1 describes a Direct Air Capture (DAC) device comprising a contactor with a polyamine sorbent that binds carbon dioxide from the air, a vacuum pump, and a resonant cavity with a gas-sealable entrance, a vacuum port, and a microwave generator. The microwave generator is designed to select a frequency that optimizes the breaking of bonds between the sorbent and carbon dioxide, facilitating the release of carbon dioxide into the vacuum port.

However, there is still in the art a need to more efficiently capture CO₂ from interior spaces to minimize ventilation needs, thus helping to reduce the energy needs of closed spaces such as buildings. In particular, there is a need to lower the energy consumption of DAC devices during the desorption step, related to the gas-solid mass transfer efficiency.

The present disclosure is directed at solving at least some of the aforementioned problems.

### DESCRIPTION OF THE DISCLOSURE

The present disclosure relates, in a first aspect, to a CO₂ handling device comprising: an air-tight housing comprising an air inlet pipe, an inert gas inlet pipe, an air outlet pipe, a vacuum pipe, and CO₂ adsorbent contained in the air-tight housing; an air impeller connected to the air inlet pipe and/or to the air outlet pipe and configured to generate an airflow through the CO₂ adsorbent from the air inlet pipe towards the air outlet pipe; an inert gas impeller connected to the inert gas inlet pipe and configured to generate a gas flow through the CO₂ adsorbent from the inert gas inlet pipe towards the air outlet pipe; a first and a second inlet pipe valve, an outlet pipe valve and a vacuum pipe valve configured to selectively seal the air-tight housing; the first inlet pipe valve configured to control the air inlet pipe, the second inlet pipe valve configured to control the inert gas inlet pipe, the outlet pipe valve configured to control the air outlet pipe and the vacuum pipe valve configured to control the vacuum pipe; a vacuum pump connected to the vacuum pipe; an inert gas deposit connected to the inert gas inlet pipe; heating tapes in thermal contact with the CO₂ adsorbent; at least two CO₂ concentration sensor; at least one temperature sensor; at least one control unit, the at least one control unit being configured to, during an air cleaning phase, open the first inlet pipe valve and the outlet pipe valve and activate the air impeller, while maintaining the temperature of the CO₂ adsorbent below 40°C, until the CO₂ concentration at the air outlet pipe is 5% lower than the CO₂ concentration at the air inlet pipe; the at least one control unit being configured to, during a temperature increasing phase, heat the heating tapes in thermal contact with the CO₂ adsorbent to a target temperature of between 70 to 100°C; the at least one control unit being configured to, during a CO₂ adsorbent cleaning phase, close the inlet pipe valve, stop the air impeller, activate the vacuum pump, and activate the inert gas impeller, until the concentration of CO₂ in the outlet pipe is about 10% of the maximum CO₂ concentration produced during the CO₂ adsorbent cleaning phase; and the at least one control unit being configured to, during a reset phase, allow the cooling of the temperature of the CO₂ adsorbent to a temperature below 40°C; wherein the CO₂ adsorbent is a composite material composed of fumed silica and low molecular weight polyethyleneimine, and the heating tapes are made of polyimide.

In the present disclosure, low molecular weight polyethyleneimine (PEI) refers to a form of polyethyleneimine polymer that has a relatively small molecular mass, typically ranging from less than 2,000 g/mol (Daltons), and often around 600 to 1,800 g/mol. PEI is a polymer composed of repeating ethyleneimine units (-CH₂CH₂NH-). It can exist in linear or branched forms, though the term "low molecular weight PEI" usually refers to the branched variant.

In the present disclosure, fumed silica refers (also known as pyrogenic silica) is a very fine, white, fluffy powder made primarily of silicon dioxide (SiO₂). It is produced by flame pyrolysis of silicon tetrachloride or by vaporizing quartz sand in a high-temperature electric arc. The process results in an ultra-lightweight, amorphous (non-crystalline) form of silica having a high surface area.

Preferably, the air impeller may be connected to the air inlet pipe.

Preferably, the air-tight housing is obtained may be manufactured by additive manufacturing i.e. 3D printing and may be composed of a heat-resistant resin. The heat-resistant resin may preferably exhibit a heat deflection temperature of at least 200°C at 0,45 MPa.

Examples of a heat-resistant resin according to the present disclosure may be epoxy vinyl esters resins.

The CO₂ adsorbent may be arranged in four cylindrical bars inside the air-tight housing.

The combination of fumed silica (FS) and low molecular weight polyethyleneimine (LMW-PEI) is designed to maximize CO₂ adsorption capacity and selectivity. Fumed silica is a silica-based material chemically modified to enhance its affinity for CO₂ molecules, promoting adsorption through the functional groups on the silica surface.

The combination of fumed silica and low molecular weight PEI creates a synergistic effect: the functionalized silica provides a high surface area for CO₂ adsorption, while LMW-PEI enhances adsorption capacity and efficiency through strong chemical interactions with CO₂. CO₂ adsorption occurs through a combination of physisorption (weak interactions) and chemisorption (chemical bonding). The functional groups on both FS and LMW-PEI interact with CO₂ molecules, leading to their capture and retention within the adsorbent material.

A key advantage of the CO₂ adsorbent material its regenerative capability; during the desorption phase, captured CO₂ is released from the adsorbent material, allowing the CO₂ adsorbent to be reused multiple times. This feature increases the overall efficiency and sustainability of the disclosed device. The adsorbent exhibits high selectivity towards CO₂ over other atmospheric gases, enabling effective removal of CO₂ while minimizing the uptake of other trace components present in indoor environments.

The CO₂ adsorbent is engineered to maintain its adsorption properties and stability over a range of temperatures typically encountered during the CO₂ capture process, including exposure to elevated temperatures up to 120 °C during desorption without significant degradation.

The composite material may be preferably composed of 50% by weight of fumed silica with respect to the total amount of the composite material and 50% by weight of low molecular weight polyethyleneimine with respect to the total amount of the composite material.

The heating tapes may be placed on two opposite sides of the air-tight housing.

The control unit enables precise process control and optimization under varying operating conditions, such as different airflow rates and inlet CO₂ concentrations. This adaptability allows the disclosed device to maintain robust performance and high efficiency across diverse indoor air quality requirements and environmental conditions.

An Arduino platform is preferably chosen as the main interface for integrating sensors and actuators by Arduino Microcontroller within the control unit. With this Arduino microcontroller and its programming environment, the disclosed device can collect, store, and display data from various sensors, pumps, and electromechanical valves (solenoids).

The data gathered is then relayed to an application interface for real-time monitoring and analysis. The application provides users with live data visualization, allowing for immediate insight into variables such as CO₂ concentrations, temperature, and flow rates. Users can also generate plots for easier analysis and trend recognition across these variables. Additionally, the application includes an option to save and export collected data in .csv format, facilitating further analysis in software such as Microsoft Excel.

The control unit receives real-time data from the at least two CO₂ concentration sensors and the at least one temperature sensor.

One CO₂ concentration sensor measures the CO₂ concentration in the air inlet pipe and the other CO₂ concentration sensor measures the CO₂ concentration in the outlet pipe. The temperature sensor may measure the temperature in the air-tight housing. Further CO₂ concentration sensors and temperature sensors may be used, for instance measuring these parameters in the room where the device is located. The sensors provide real-time data to the control unit, allowing the control unit to control the opening and closure of valves, the opening and closure of the air impellers, vacuum pump, increase and decrease of the temperature in the heating tapes, according to the parameters of CO₂ concentration and temperature defined in the claims.

The present disclosure relates, in a second aspect, to a method for extracting or capturing CO₂ from indoor air, the method comprising the following steps: a) during an air cleaning phase, passing a controlled flow of inlet air with a first CO₂ concentration through an air-tight housing comprising a CO₂ adsorbent while maintaining the CO₂ adsorbent at a temperature below 40°C, producing an increase in the CO₂ concentration of the CO₂ adsorbent, and obtaining a flow of first outlet air with a second CO₂ concentration lower than the first CO₂ concentration; b) during a temperature increasing phase, increasing the temperature of the CO₂ adsorbent through heating tapes activation up to a target temperature of between 70 and 100 °C; c) during a CO₂ adsorbent cleaning phase, maintaining the CO₂ adsorbent at the target temperature while passing a controlled flow of inlet inert gas through the air-tight housing and submitting the CO₂ adsorbent to vacuum, and obtaining a flow of second outlet air with a third CO₂ concentration higher than the first CO₂ concentration; d) during a reset phase, cooling the CO₂ adsorbent to a temperature below 40°C, wherein the temperature of the CO₂ adsorbent is increased by polyimide heating tapes in thermal contact with the CO₂ adsorbent; and the CO₂ adsorbent is a composite material composed of fumed silica and low molecular weight polyethyleneimine.

In the method herein disclosed, the cooling of the CO₂ adsorbent may be performed with a flow of air or a flow of nitrogen gas.

The target temperature described above may preferably be about 80°C.

The CO₂ adsorbent may preferably be submitted to a vacuum of between 100 to 500 mbar in step c).

Preferably, the temperature below 40°C described above is room temperature, ca. 20°C.

The method described herein may cyclically repeat the steps a), b), c) and d), preferably in a sequential manner.

The inert gas in step c) may preferably be nitrogen gas.

The device herein disclosed and the method herein disclosed allow for quick transitions from CO₂ capture to CO₂ desorption and enhancing the ratios of CO₂ captured and released over time. The control unit and the parameters described above allow for an optimal capture and desorption of CO₂.

The disclosure herein allows to perform a rapid and smooth transition from the CO₂ concentration cycle to the CO₂ desorption cycle by rapid adjusting the device to the target temperature and obtaining a rapid increase using polyimide heating tapes, that are preferably attached to the top and bottom of the device according to the disclosure.

The present disclosure allows for heating times to be between 10 to 15 minutes, though most tests were conducted with a maximum heating duration of 30 minutes to prolong the lifespan of the materials. Shorter heating times under 10 minutes are achievable but were infrequently tested to ensure the durability of the prototypes in the laboratory. The use of polyimide heating tapes maximizes contact with the air inside the heating chamber surrounding the CO₂ adsorbent. Additionally, the prototype's compact design and the insulating materials used in its additive manufacturing minimize heat loss, ensuring efficient energy utilization and reduced heating requirements compared to other gas-solid contactor designs and heating methods. An added benefit of the disclosure is the ease of assembly and use of polyimide heating tapes, which are available in customizable geometries and offer high durability over time.

By enhancing control over the duration and capabilities of each cycle through the control unit, the overall process efficiency improves, positioning the present disclosure above other CO₂ capture technologies. The automated operation of the device herein disclosed, where the parameters of CO₂ concentration and temperature are monitored and analyzed in real time by the control unit enables precise adjustments of the duration of each cycle, aiming to maximize both the adsorption capacity of the adsorbent material and the CO₂ concentration generated during desorption.

As mentioned above, the control unit, by means of an e.g. Arduino software, receives real-time data from indoor air sensors (for e.g. CO₂, relative humidity, and temperature), actuators (e.g. vacuum pumps), and temperature thermocouples (e.g. temperature sensors). This data allows the device to fine-tune the duration of the desorption cycle, significantly reducing energy costs associated with the regeneration of the adsorbent material, which can account for up to 80% of the total energy required in many solid adsorbent CO₂ capture technologies. To further decrease energy inputs during the desorption cycle, the outlet pressure is regulated between 100 and 500 mbar, depending on the cycle's stage, with lower pressures applied towards the end and higher pressures at the beginning when the prototype is more saturated with CO₂.

The device disclosed herein may preferably be manufactured using additive manufacturing, also known as 3D printing. By means of this fabrication method, it is ensured that the maximum tightness is obtained and the heat and air leaks are prevented.

The present disclosure provides at least the following advantages with respect to devices and systems disclosed in the prior art:
- High efficiency CO₂ adsorption and desorption through a tunable thermal cycle;
- Use of robust, regenerable, and selectively CO₂-adsorbing composite materials;
- Integration of sensors and automated control for smart operation;
- Additively manufactured housing with high thermal resistance; and
- Compact and reusable system suitable for long-term deployment in enclosed environments.

### BRIEF DESCRIPTION OF THE FIGURES

The foregoing and other advantages and features will be fully understood from the following detailed description of an embodiment with reference to the accompanying drawings, to be taken in an illustrative and non-limitative manner, in which:
FIG. 1 is a schematic representation of an embodiment of the CO₂ handling device disclosed herein.
FIG. 2 is a perspective view illustrating the air-tight housing of the CO₂ handling device disclosed herein.
FIG. 3 is a diagram plotting the ability to produce concentrated streams of CO₂ up to a concentration of 90 % using nitrogen as inert gas.

### DETAILED DESCRIPTION OF AN EMBODIMENT

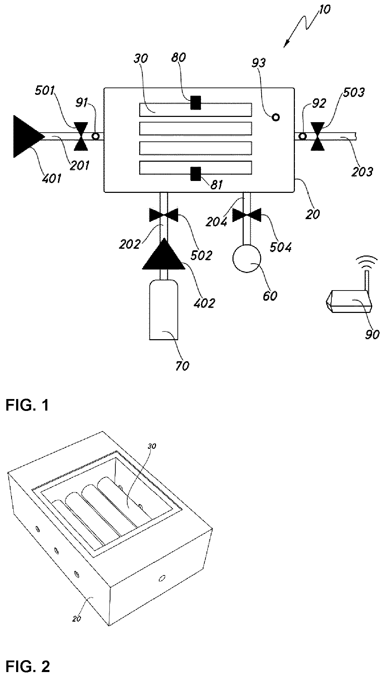

An embodiment of the device disclosed herein is schematically depicted in FIG. 1. Indeed, FIG. 1 shows a CO₂ handling device (10) comprising an air-tight housing (20), the air-tight housing (20) comprising an air inlet pipe (201), an inert gas inlet pipe (202), an air outlet pipe (203), a vacuum pipe (204). A CO₂ adsorbent (30) is contained inside the air-tight housing (20). In FIG. 1, the CO₂ adsorbent (30) is placed in four cylindric bars.

The CO₂ handling device (10) also comprises an air impeller (401) connected to the air inlet pipe (201), the air impeller (401) being configured to generate an airflow through the CO₂ adsorbent (30) from the air inlet pipe (201) towards the air outlet pipe (203).

An inert gas impeller (402) is connected to the inert gas inlet pipe (202) and configured to generate a gas flow through the CO₂ adsorbent (30) from the inert gas inlet pipe (202) towards the air outlet pipe (203).

The CO₂ handling device (10) also comprises a first and a second inlet pipe valve (501, 502), an outlet pipe valve (503) and a vacuum pipe valve (504) configured to selectively seal the air-tight housing (20); the first inlet pipe valve (501) configured to control the air inlet pipe (201), the second inlet pipe valve (502) configured to control the inert gas inlet pipe (202), the outlet pipe valve (503) configured to control the air outlet pipe (203) and the vacuum pipe valve (504) configured to control the vacuum pipe (204).

The CO₂ handling device (10) also comprises a vacuum pump (60) connected to the vacuum pipe (204); an inert gas deposit (70) connected to the inert gas inlet pipe (202); two heating tapes (80, 81) in thermal contact with the CO₂ adsorbent (30); at least two CO₂ concentration sensor (91, 92); at least one temperature sensor (93); and one control unit (90).

The control unit (90) is configured to, during an air cleaning phase, open the first inlet pipe valve (501) and the outlet pipe valve (503) and activate the air impeller (401), while maintaining the temperature of the CO₂ adsorbent (30) below 40°C, until the CO₂ concentration at the air outlet pipe (203) is 5% lower than the CO₂ concentration at the air inlet pipe (201).

The control unit (90) is also configured to, during a temperature increasing phase, heat the heating tapes (80) in thermal contact with the CO₂ adsorbent (30) to a target temperature of between 70 to 100°C.

The control unit (90) is also configured to, during a CO₂ adsorbent cleaning phase, close the inlet pipe valve (501), stop the air impeller (401), activate the vacuum pump (60), open the vacuum pipe valve (504) and activate the inert gas impeller (402), until the concentration of CO₂ in the outlet pipe (203) is about 10% of the maximum CO₂ concentration produced during the CO₂ adsorbent cleaning phase.

The control unit (90) is also configured to, during a reset phase, allow the cooling of the temperature of the CO₂ adsorbent (30) to a temperature below 40°C.

In the embodiment in FIG. 1, the CO₂ adsorbent (30) is a composite material composed of fumed silica and low molecular weight polethyleneimine, and the heating tapes (80) are made of polyimide.

FIG. 2 discloses a specific embodiment of the air-tight housing (20). The CO₂ adsorbent (30), made of a composite material composed of fumed silica and low molecular weight polyethyleneimine, is arranged in four cylindrical bars. The air-tight housing (20) is made of a heat-resistant material and manufactured by additive manufacturing.

### EXAMPLES

CO₂ capture tests were carried out using two different devices according to the present disclosure at different scales: a first prototype having a volume of 250 ml and a second with a volume of 500 ml.

Both prototypes were first characterized using only CO₂ standards for the characterization and optimization of the process, and later in a second step for validation purposes they were tested using real air from indoor spaces to validate the operation of the process.

An experiment of CO₂ capture was carried out using the 500 ml-volume prototype above. This prototype was operated at 1 air change per hour (ACH), achieving 100% CO₂ capture efficiency for up to 2 hours when the inlet air flow rate was 0.5 L/min and the CO₂ inlet concentration was 1500 ppmv.

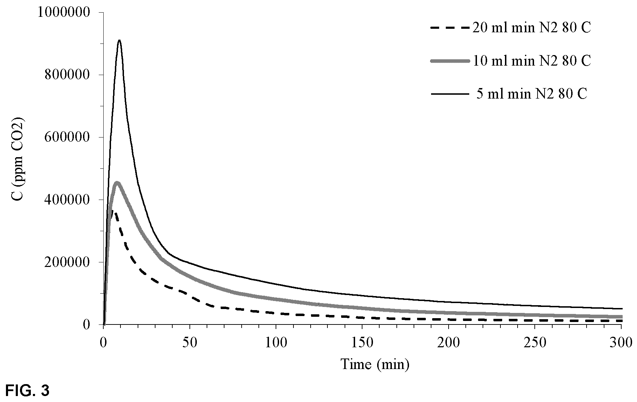

Desorption tests followed focused on thermal desorption using nitrogen as sweep (inert) gas at 5, 10 and 30 mL/min
FIG. 3 shows the results obtained for the 500 ml prototype. These tests primarily focused on the effect of the nitrogen flowrate as inlet inert gas (or sweep gas) and used temperature as desorption technique. These tests demonstrated the capability of the prototype to generate CO₂ streams with purity levels of up to 90% (v/v) at a flow rate of 5 ml/min by introducing nitrogen as inert gas at three different flowrates (5, 10 and 20 ml/min, respectively). These tests, relying solely on temperature as desorption methodology, demonstrated the capacity of the device herein disclosed to generate CO₂ at high concentrations.

In an embodiment of the device, the vacuum pump was a 12 V diaphragm vacuum pump (Dewing-UK) with a maximum flow rate of 5 L/min and 120 kPa of negative pressure suction, the valves used were solenoid valves (EV210A; Function: NC, G, 1/8, 0.040 m³/h, FKM, Danfoss-Denmark; Coil: AB024D, DIN blade, Multipack, Danfoss-Denmark), CO₂ sensors employ the SPRINTlR^{®} sensing method based on solid-state NDIR absorption, with a measuring range of 0-20%, having an accuracy of ±70 ppmᵥ or ±5% of the reading.

The air-tight housing is made, in a particular embodiment, of a material resistant to at least 100°C, preferably constructed with a specialized high-temperature resin designed for heat resistance, exhibiting a heat deflection temperature of 238°C at 0.45 MPa, the highest rating among Formlabs resins. This resin is suitable for producing detailed, precise devices that can withstand high-temperature applications involving hot air, gas, and fluid flows. The heating in the air-tight housing is achieved by using flexible polyimide tape heating fim (Shenzhen Datang Dingsheng Technology Co).

In a particular embodiment, the packing density of the CO₂ adsorbent material in the adsorption columns is 0.29 g·cm⁻³, with adsorption capacity at bed exhaustion under 60% RH conditions ranging from 1.47 mmols·g⁻¹ (18 kg·m⁻³) in a CO₂ concentration of 400 ppmᵥ to 2.80 mmols·g-1 (35.5 kg·m⁻³) in a CO₂ concentration of 5000 ppmᵥ at room temperature (22 ± 2 °C).

In a particular embodiment, the control unit comprises the Arduino Microcontroller Arduino Mega 2560 Rev3 model, selected for its ample input and output capacity, supporting all necessary reading and processing functions.

## Claims

1. A CO₂ handling device (10) comprising:
an air-tight housing (20) comprising an air inlet pipe (201), an inert gas inlet pipe (202), an air outlet pipe (203), a vacuum pipe (204), and containing a CO₂ adsorbent (30);
an air impeller (401) connected to the air inlet pipe (201) and/or to the air outlet pipe (203) and configured to generate an airflow through the CO₂ adsorbent (30) from the air inlet pipe (201) towards the air outlet pipe (203);
an inert gas impeller (402) connected to the inert gas inlet pipe (202) and configured to generate a gas flow through the CO₂ adsorbent (30) from the inert gas inlet pipe (202) towards the air outlet pipe (203);
a first and a second inlet pipe valve (501, 502), an outlet pipe valve (503) and a vacuum pipe valve (504) configured to selectively seal the air-tight housing (20); the first inlet pipe valve (501) configured to control the air inlet pipe (201), the second inlet pipe valve (502) configured to control the inert gas inlet pipe (202), the outlet pipe valve (503) configured to control the air outlet pipe (203) and the vacuum pipe valve (504) configured to control the vacuum pipe (204);
a vacuum pump (60) connected to the vacuum pipe (204);
an inert gas deposit (70) connected to the inert gas inlet pipe (202);
heating tapes (80, 81) in thermal contact with the CO₂ adsorbent (30);
at least two CO₂ concentration sensor (91, 92);
at least one temperature sensor (93);
at least one control unit (90),
the at least one control unit (90) being configured to, during an air cleaning phase, open the first inlet pipe valve (501) and the outlet pipe valve (503) and activate the air impeller (401), while maintaining the temperature of the CO₂ adsorbent (30) below 40°C, until the CO₂ concentration at the air outlet pipe (203) is 5% lower than the CO₂ concentration at the air inlet pipe (201),
the at least control unit (90) being configured to, during a temperature increasing phase, heat the heating tapes (80) in thermal contact with the CO₂ adsorbent (30) to a target temperature of between 70 to 100°C,
the at least one control unit (90) being configured to, during a CO₂ adsorbent cleaning phase, close the inlet pipe valve (501), stop the air impeller (401), activate the vacuum pump (60), open the vacuum pipe valve (504) and activate the inert gas impeller (402), until the concentration of CO₂ in the outlet pipe (203) is about 10% of the maximum CO₂ concentration produced during the CO₂ adsorbent cleaning phase, and
the at least control unit (90) being configured to, during a reset phase, allow the cooling of the temperature of the CO₂ adsorbent (30) to a temperature below 40°C;
wherein the CO₂ adsorbent (30) is a composite material composed of fumed silica and low molecular weight polethyleneimine, and
the heating tapes (80) are made of polyimide.

2. The CO₂ handling device (10) according to claim 1, wherein the air-tight housing is obtained by additive manufacturing.

3. The CO₂ handling device (10) according to claims 1 or 2, wherein the air-tight housing (20) is made of a heat-resistant resin.

4. The CO₂ handling device (10) according to claim 2, wherein the heat-resistant resin exhibits a heat deflection temperature of at least 200°C at 0,45 MPa.

5. The CO₂ handling device according to any one of claims 1 to 4, wherein the CO₂ adsorbent is placed in four cylindric bars contained in the air-tight housing (20).

6. The CO₂ handling device (10) according to any one of claims 1 to 5, wherein the composite material is composed of 50% by weight of fumed silica with respect to the total amount of the composite material and 50% by weight of low molecular weight polyethyleneimine with respect to the total amount of the composite material.

7. The CO₂ handling device according to any one of claims 1 to 6, wherein the heating tapes (80) are placed on two opposite sides of the air-tight housing (20).

8. A method for extracting CO₂ from indoor air, the method comprising the following steps:
a) during an air cleaning phase, passing a controlled flow of inlet air with a first CO₂ concentration through an air-tight housing (20) comprising a CO₂ adsorbent (30) while maintaining the CO₂ adsorbent (30) at a temperature below 40°C, producing an increase in the CO₂ concentration of the CO₂ adsorbent (30), and obtaining a flow of first outlet air with a second CO₂ concentration lower than the first CO₂ concentration;
b) during a temperature increasing phase, increasing the temperature of the CO₂ adsorbent (30) through heating tapes (80) activation up to a target temperature of between 70 and 100 °C;
c) during a CO₂ adsorbent cleaning phase, maintaining the CO₂ adsorbent (30) at the target temperature while passing a controlled flow of inlet inert gas through the air-tight housing (20) and submitting the CO₂ adsorbent (30) to vacuum, and obtaining a flow of second outlet air with a third CO₂ concentration higher than the first CO₂ concentration;
d) during a reset phase, cooling the CO₂ adsorbent (30) to a temperature below 40°C,
wherein
the temperature of the CO₂ adsorbent (30) is increased by polyimide heating tapes (80) in thermal contact with the CO₂ adsorbent (30), allowing a warm up of the air-tight housing and CO₂ adsorbent (30); and
the CO₂ adsorbent (30) is a composite material composed of fumed silica and low molecular weight polyethyleneimine.

9. The method according to claim 8, wherein the cooling of the CO₂ adsorbent (30) is performed with a flow of air or a flow of nitrogen gas.

10. The method according to claims 8 or 9, wherein the target temperature is about 80°C.

11. The method according to any one of claims 8 to 10, wherein the CO₂ adsorbent (30) is submitted to a vacuum of between 100 to 500 mbar.

12. The method according to any one of claims 8 to 11, wherein the temperature below 40°C is room temperature.

13. The method according to any one of claims 8 to 12, wherein the composite material is composed of 50% by weight of functionalized silica with respect to the total amount of the composite material and 50% by weight of low molecular weight polyethyleneimine with respect to the total amount of the composite material.

14. The method according to any one of claims 8 to 13, wherein the steps a), b), c) and d) are cyclically repeated.

15. The method according to any one of claims 8 to 14, wherein the inert gas in step c) is nitrogen.
